# EUROPÄISCHE PATENTANMELDUNG

(11) **EP 4 190 430 A1**
(43) Veröffentlichungstag der Anmeldung: **07.06.2023**
(21) Anmeldenummer: 22208890.8
(22) Anmeldetag: 22.11.2022
(51) Int. Cl.: B01D 53/32, F24C 15/20

(54) **FILTEREINHEIT FÜR DUNSTABZUGSVORRICHTUNG UND DUNSTABZUGSVORRICHTUNG**

(30) Priorität: 02.12.2021 DE 102021213670
(71) Anmelder: BSH Hausgeräte GmbH, 81739 München (DE)
(72) Erfinder: Hepperle, Georg, 74081 Heilbronn (DE); John, Barbara, 76646 Bruchsal (DE); Vollmar, Daniel, 76327 Pfinztal (DE)

(57) **Zusammenfassung**

Die vorliegende Erfindung betrifft Filtereinheit für eine Dunstabzugsvorrichtung, wobei die Filtereinheit (12) mindestens eine Plasmaelektrode (1) umfassend ein als Dielektrikum wirkendes Substrat (5), eine Hochspannungselektrode (7) und mindestens eine Gegenelektrode (6) umfasst. Die Filtereinheit (12) ist dadurch gekennzeichnet, dass das Substrat (5) aus keramischem Material besteht, dass das Substrat (5) eine luftdurchlässige Struktur mit zumindest einer Durchlassöffnung (4) darstellt und dass zumindest die Hochspannungselektrode (7) in dem Substrat (5) eingebettet ist. Zudem wird eine Dunstabzugsvorrichtung mit mindestens einer Filtereinheit (12) beschrieben.

## Beschreibung

Die vorliegende Erfindung betrifft eine Filtereinheit für eine Dunstabzugsvorrichtung und eine Dunstabzugsvorrichtung mit einer solchen Filtereinheit.

Bei Dunstabzugsvorrichtungen, wie beispielsweise Dunstabzugshauben, die über einem Kochfeld montiert werden, oder Muldenlüftern, die in oder neben dem Kochfeld montiert werden, die in Küchen verwendet werden, ist es bekannt diese als Abluft-Dunstabzugsvorrichtung oder Umluft-Dunstabzugsvorrichtung zu betreiben oder diese als Umluft-Dunstabzugsvorrichtung auszugestalten. Insbesondere bei Dunstabzugsvorrichtungen, die als Umluft-Dunstabzugsvorrichtung ausgestaltet sind oder als Umluft-Dunstabzugsvorrichtung betrieben werden können, müssen Kochgerüche und insbesondere flüchtige organische Verbindungen (Volatile Organic Compounds (VOC)) aus den Kochwrasen ausgefiltert werden. Dabei ist eine hocheffiziente Luftfiltereinrichtung unerlässlich, da die angesaugte Wrasenluft bei Umluftbetrieb oder Umluftausgestaltung der Dunstabzugsvorrichtung im geschlossenen Raum zirkuliert und nicht ins Freie, das heißt in die Außenluft, ausgeblasen wird.

Für die Geruchsfiltration von Kochdünsten und sonstigen organischen, flüchtigen Verbindungen VOC's werden in der Praxis für den Umluftfall hauptsächlich Aktivkohlefilter oder Zeolithfilter (in der Praxis für Dunstabzüge auch als Umluftfilter bezeichnet) eingesetzt. Diese werden üblicherweise direkt hinter dem Fettfilter, das heißt in Strömungsrichtung noch vor dem Lüfter, verbaut oder im Ausblasbereich des Dunstabzuges in Strömungsrichtung hinter dem Lüfter eingesetzt. Ein Nachteil dieser Filtermedien ist die begrenzte Standzeit, da sich diese Medien über die Betriebszeit des Dunstabzuges zusetzen, was wiederum die Filtereffizienz negativ beeinflusst. Folglich müssen diese Filtermedien aufgrund der begrenzten Standzeit in definierten Intervallen ausgetauscht oder mittels Wärmeeinwirkung regeneriert werden.

Neben diesen genannten Adsorbientien finden in der Praxisanwendung weiterhin Plasmafilter Einsatz, die als autarke Systeme zur Geruchsneutralisation eingesetzt werden. Diese Systeme, meist als Zukaufteile gedacht, werden auf den Ausblasstutzen (in Strömungsrichtung nach dem Lüfter) des Dunstabzuges als Aufsatz verbaut. Das Kernstück dieser Plasmafilter bildet die Plasmaelektrode, die das eigentliche Plasma generiert. Dieses Plasma wird an der Oberfläche der Plasmaelektrode erzeugt und wird daher auch als Oberflächenplasma bezeichnet. Die Luft strömt dabei parallel zu der Erstreckung der Plasmaelektrode. Diese Plasmaelektroden haben den großen Nachteil, dass die an der Plasmaelektrode entlangströmende Luft nicht vollständig mit dem generierten Plasma in Kontakt kommt und die Kochgerüche, insbesondere VOC's, nur eingeschränkt abgebaut beziehungsweise neutralisiert werden. Dies führt zu einer verminderten Filtereffizienz. Ein weiterer Nachteil dieser Plasmaelektroden ist der unzureichende Schutz gegen elektrochemische Korrosion.

Der vorliegenden Erfindung liegt daher die Aufgabe zugrunde eine Lösung zu schaffen, die die Nachteile des Standes der Technik zumindest teilweise behebt.

Gemäß einem ersten Aspekt wird die Aufgabe daher gelöst durch eine Filtereinheit nach Anspruch 1. Gemäß einem weiteren Aspekt wird die Aufgabe durch eine Dunstabzugsvorrichtung nach Anspruch 11 gelöst. Bevorzugte Ausführungsformen sind in den abhängigen Ansprüchen angegeben.

Die Erfindung betrifft daher eine Filtereinheit für eine Dunstabzugsvorrichtung, wobei die Filtereinheit mindestens eine Plasmaelektrode umfassend ein als Dielektrikum wirkendes Substrat, eine Hochspannungselektrode und mindestens eine Gegenelektrode umfasst. Die Filtereinheit ist dadurch gekennzeichnet, dass das Substrat aus keramischem Material besteht, dass das Substrat eine luftdurchlässige Struktur mit zumindest einer Durchlassöffnung darstellt und dass zumindest die Hochspannungselektrode in dem Substrat eingebettet ist.

Die Dunstabzugsvorrichtung für die die Filtereinheit verwendet wird, kann eine Dunstabzugshaube oder ein Muldenlüfter sein. Als Dunstabzugshaube wird hierbei eine Dunstabzugsvorrichtung bezeichnet, die oberhalb einem Kochfeld oder einer Arbeitsplatte angeordnet ist und die Luft nach oben einsaugt. Als Muldenlüfter wird eine Dunstabzugsvorrichtung bezeichnet, die in oder neben einem Kochfeld angeordnet ist und die Luft nach unten einsaugt. Die Dunstabzugsvorrichtung wird vorzugsweise in einer Küche betrieben.

Als Filtereinheit wird erfindungsgemäß eine Einheit bezeichnet, durch die Geruchsstoffe, insbesondere flüchtige organische Verbindungen (VOC's) aus der angesaugten Luft ausgefiltert werden können. Die Filtereinheit umfasst mindestens eine Plasmaelektrode. Die Filtereinheit kann auch als Filterkassette oder Filtermodul bezeichnet werden. Insbesondere kann die Filtereinheit vorteilhaft bei Dunstabzugsvorrichtungen eingesetzt werden, die im Umluftbetrieb betrieben werden oder betrieben werden können. In einer einfachen Ausführungsform besteht die Filtereinheit aus der mindestens einen Plasmaelektrode. Die Plasmaelektrode kann mit einer Spannungsquelle verbunden werden, um das zur Reinigung der Luft erforderliche Plasma zu erzeugen. Die Spannungsquelle kann Teil der Filtereinheit sein oder in der Dunstabzugsvorrichtung integriert sein und mit der Plasmaelektrode verbunden werden. Zudem kann die Filtereinheit Befestigungsmittel zur Befestigung in der Dunstabzugsvorrichtung und/oder Trägerelemente zum Halten der Plasmaelektrode aufweisen.

Die Plasmaelektrode stellt vorzugsweise ein flächiges Element dar. Die Plasmaelektrode weist erfindungsgemäß ein als Dielektrikum wirkendes Substrat, eine Hochspannungselektrode und mindestens eine Gegenelektrode auf. In einer bevorzugten Ausführungsform sind das Substrat, die Hochspannungselektrode und die Gegenelektrode jeweils flächig ausgestaltet. Die Gegenelektrode kann beispielsweise eine Gitterform aufweisen. Die Gegenelektrode(n) und die Hochspannungselektrode können jeweils vorzugsweise aus korrosionsbeständigen Werkstoffen bestehen, vorzugsweise Silber, Wolfram-, Nickel-Legierungen und/oder Hartgold.

Das Substrat besteht vorzugsweise aus einem elektrisch isolierenden und elektrochemisch korrosionsbeständigen Werkstoff. Das Substrat fungiert zudem als Dielektrikum. Als Dielektrikum wird eine elektrisch schwach- oder nichtleitendes Material bezeichnet: Insbesondere sind in dem Dielektrikum die vorhandenen Ladungsträger nicht frei beweglich. Das Dielektrikum stellt erfindungsgemäß einen Feststoff dar.

Erfindungsgemäß beseht das Substrat aus keramischem Material. Als keramisches Material wird ein Werkstoff bezeichnet, der einen anorganischen nichtmetallischen Werkstoff darstellt. Als keramisches Material wird vorzugsweise ein oxydisches Material bezeichnet. Insbesondere kann Aluminiumoxid (Al₂O₃) als keramisches Material verwendet werden.

Das Substrat weist eine luftdurchlässige Struktur auf. Das Substrat weist dabei eine flächige Form auf. Insbesondere kann das Substrat die Form einer Platte aufweisen. Erfindungsgemäß weist das Substrat zumindest eine Durchlassöffnung auf. Die Durchlassöffnung kann auch als Loch oder Bohrung bezeichnet werden. Insbesondere wird als Durchlassöffnung eine Öffnung bezeichnet, die sich zwischen den Stirnflächen des Substrates erstreckt und diese miteinander verbindet. Als Stirnfläche des Substrates wird dabei eine Oberfläche bezeichnet, die die Anströmseite des Substrates oder die Abströmseite des Substrates in dem in der Dunstabzugsvorrichtung eingesetzten Zustand darstellt. Da das Substrat mindestens eine Durchlassöffnung aufweist, kann die Plasmaelektrode auch als perforierte Plasmaelektrode bezeichnet werden.

Erfindungsgemäß ist zumindest die Hochspannungselektrode in dem Substrat eingebettet. Als eingebettet wird hierbei eine Position bezeichnet, in der die Hochspannungselektrode in der senkrecht zu der Erstreckung der Hochspannungselektrode liegenden Schnittansicht von allen Seiten von dem Material des Substrates umgeben ist. Durch Vorsehen mindestens einer Gegenelektrode und Anlegen einer entsprechenden Spannung wird an mindestens einer Oberfläche der Plasmaelektrode ein Plasma erzeugt. Die Plasmaelektrode kann daher auch als Oberflächenplasmaelektrode bezeichnet werden. Die Hochspannungselektrode weist vorzugsweise eine flächige Erstreckung auf. Beispielsweise kann die Hochspannungselektrode eine Gitterform aufweisen.

Das keramische Substrat zusammen mit der Hochspannungselektrode und der oder den Gegenelektroden wird auch als Werkstoffverbund bezeichnet.

Indem erfindungsgemäß das als Dielektrikum wirkende Substrat aus keramischem Material besteht, das Substrat eine luftdurchlässige Struktur mit zumindest einer Durchlassöffnung darstellt und zumindest die Hochspannungselektrode in dem Dielektrikum eingebettet ist, kann eine Reihe von Vorteilen erzielt werden.

Mit der Plasmaelektrode kann eine dielektrisch behinderte Barriereentladung, die auch als dielektrische Barriereentladung (DBE) bezeichnet wird, erzielt werden. Mit der erfindungsgemäßen Plasmaelektrode kann somit ein nichtthermisches Plasma mittels DBE erzeugt werden. Durch den DBE-Effekt werden olfaktorisch unangenehme Gerüche in der Luft abgebaut beziehungsweise beseitigt, insbesondere wird eine Geruchsbeseitigung von organisch flüchtigen Verbindungen VOCs erzielt.

Zudem kann durch das keramische Material des Substrates ein höchstmöglicher Schutz gewährleistet werden. Insbesondere kann ein Schutz hinsichtlich elektrischer Isolation und gegen elektrochemische Korrosion, die durch das Plasma hervorgerufen werden kann, erzielt werden. Dadurch kann die Standzeit der Plasmaelektrode verlängert werden. Zudem ist keramisches Material temperaturbeständig und chemisch resistent gegen haushaltsübliche Säuren und Laugen. Folglich kann die erfindungsgemäße Filtereinheit oder zumindest die Plasmaelektrode nach Bedarf im Geschirrspüler gereinigt werden.

Da das als Dielektrikum wirkende Substrat eine luftdurchlässige Struktur aufweist, die zumindest eine Durchlassöffnung aufweist, kann eine homogene Durchmischung der durchströmenden Luft mit dem durch die Hochspannungselektrode erzeugten Plasmas gewährleistet werden. Hierdurch wird die Filtereffizienz der Filtereinheit gesteigert.

Durch die Einbettung zumindest der Hochspannungselektrode in dem Substrat ist diese vollständig elektrisch isoliert und vor elektrochemischer Korrosion geschützt. Somit ist die Hochspannungselektrode im Gegensatz zum Stand der Technik geschützt und steht nicht unmittelbar mit der anströmenden Luft in Kontakt. Somit ist die Hochspannungselektrode bei der erfindungsgemäßen Plasmaelektrode keinen Oxidationsprozessen im Betrieb ausgesetzt, so dass Korrosionsprozesse der Hochspannungselektrode verhindert werden und eine Zerstörung der Hochspannungselektrode über die Betriebszeit verhindert wird.

Gemäß einer bevorzugten Ausführungsform stellt die luftdurchlässige Struktur, die das Substrat bildet, ein Gitter dar. Die Durchlassöffnungen des Substrates können dabei eine quadratische, rechteckige, polygonale oder eine runde Form aufweisen. Bei der Ausführungsform, bei der die luftdurchlässige Struktur ein Gitter darstellt, stellen vorzugsweise auch die Hochspannungselektrode und die mindestens eine Gegenelektrode ein Gitter dar. Die Durchlassöffnungen der Hochspannungselektrode und Gegenelektrode werden zur besseren Unterscheidung als Durchlässe bezeichnet. Die Form der Durchlässe des Gitters der Hochspannungselektrode und Gegenelektrode(n) entspricht in diesem Fall der Form der Durchlassöffnungen der gitterförmigen Struktur des Substrates.

Hinsichtlich der geometrischen Formgebung der Durchlassöffnungen in dem Substrat wird vorzugsweise eine rechteckige oder hexagonale Form gewählt. Bei dieser Formgebung kann ein vorteilhaftes Öffnungsverhältnis, das heißt Durchströmungsfläche zu Plasmaelektrodenstirnfläche, erzielt werden.

Gemäß einer Ausführungsform weist die Hochspannungselektrode mindestens einen Durchlass auf und ein Durchlass der Hochspannungselektrode umgibt zumindest eine Durchlassöffnung der Struktur des Substrates. Hierbei kann jede Durchlassöffnung von einem Durchlass der Hochspannungselektrode umgeben sein. Alternativ ist es aber auch möglich, dass beispielsweise zwei benachbarte Durchlassöffnungen von einem einzigen Durchlass der Hochspannungselektrode umgeben werden. In diesem Fall ist in dem Steg zwischen den benachbarten Durchlassöffnungen kein Teil der Hochspannungselektrode vorgesehen. Alternativ kann die Hochspannungselektrode auch so ausgestaltet sein, dass der Durchlass der Hochspannungselektrode nur einen Teil einer Durchlassöffnung des Substrates umgibt und beispielsweise eine Unterbrechung aufweist.

Gemäß einer Ausführungsform ist mindestens eine Gegenelektrode auf einer Stirnfläche des Substrates angeordnet. Die Gegenelektrode kann beispielsweise auf das Substrat aufgedruckt sein.

Die Gegenelektrode weist vorzugsweise eine Form entsprechend der Form der Hochspannungselektrode auf. Insbesondere kann die Gegenelektrode eine Gitterform aufweisen. Als Stirnfläche des Substrates wird die Anströmseite oder die Abströmseite des Substrates und damit der Plasmaelektrode bezeichnet.

Gemäß einer Ausführungsform ist mindestens eine Gegenelektrode, die auf der Stirnfläche des Substrates angeordnet ist, durch eine Beschichtung abgedeckt. Hierdurch wird ein zusätzlicher Schutz der Gegenelektrode vor elektrochemischer Korrosion, hervorgerufen durch das Plasma, gewährleisten. Gemäß einer Ausführungsform ist die Stirnfläche auf der die Gegenelektrode angeordnet ist, vollständig oder zumindest im Bereich der Gegenelektrode beschichtet. Die Beschichtung kann auch als Überzug bezeichnet werden. Vorzugsweise wird ein elektrochemisch beständiger, elektrisch isolierender Überzug verwendet. Die Beschichtung kann beispielsweise eine Glasur darstellen. Besonders bevorzugt werden keramische Überzüge, Lacke auf Fluorpolymerbasis oder Sol-Gel-Beschichtungen verwendet. Die Schichtdicke der Beschichtung beträgt vorzugsweise maximal 1 mm, besonders bevorzugt liegt die Schichtdicke zwischen 0,001 und 0,5mm. Durch diese geringe Schichtdicke kann gewährleistet werden, dass das Plasma zuverlässig gezündet werden kann.

Gemäß einer Ausführungsform ist mindestens eine Gegenelektrode in dem Dielektrikum benachbart zu einer Stirnfläche des Substrates eingebettet. Bei dieser Ausführungsform liegt die Gegenelektrode vorzugsweise zu der Stirnfläche des Substrates in einem Abstand von maximal 1mm, besonders bevorzugt zwischen 0,001 und 0,5mm in dem Substrat. Durch diesen geringen Abstand kann gewährleistet werden, dass das Plasma zuverlässig gezündet werden kann. Indem zusätzlich zu der Hochspannungselektrode auch die mindestens eine Gegenelektrode in dem Substrat eingebettet ist, sind diese vollständig elektrisch isoliert und gegen äußere Einflüsse wie elektrochemische Korrosion, Feuchtigkeit und Schmutz geschützt.

Gemäß einer Ausführungsform weist die Plasmaelektrode zwei Gegenelektroden auf, zwischen denen die Hochspannungselektrode angeordnet ist. Bei dieser Ausführungsform können die gegenüberliegenden Gegenelektroden auf den gegenüberliegenden Stirnflächen des Substrates angeordnet sein oder in dem Substrat benachbart zu den gegenüberliegenden Stirnflächen eingebettet sein. Bei diesen Ausführungsformen wird das Plasma an beiden Stirnflächen der luftdurchlässigen Plasmaelektrode generiert. Somit können beide Stirnflächen für die Reinigung der wrasenhaltigen Luft genutzt werden. Zudem kann die Plasmaelektrode in beiden Ausrichtungen eingesetzt werden, insbesondere in einer ersten Ausrichtung, in der eine erste Stirnfläche von der zur reinigenden Luft angeströmt wird und in einer zweiten Ausrichtung, in der die gegenüberliegende Stirnfläche von der zu reinigenden Luft angeströmt wird. Auch bei der Ausgestaltung der Plasmaelektrode mit zwei Gegenelektroden sind vorzugsweise beide Gegenelektroden beschichtet oder in dem Substrat eingebettet.

Gemäß einem weiteren Aspekt betrifft die vorliegende Erfindung eine Dunstabzugsvorrichtung, die mindestens eine erfindungsgemäße Filtereinheit aufweist.

Vorteile und Merkmale, die bezüglich der Filtereinheit beschrieben werden, gelten - soweit anwendbar - entsprechend für die Dunstabzugsvorrichtung und umgekehrt.

Gemäß einer bevorzugten Ausführungsform ist die mindestens eine Filtereinheit so in der Dunstabzugsvorrichtung angeordnet, dass die mindestens eine Plasmaelektrode senkrecht zu der Strömungsrichtung in der Dunstabzugsvorrichtung liegt. Als Strömungsrichtung wird die Richtung bezeichnet, in der die zu reinigende Luft die Dunstabzugsvorrichtung durchströmt. Als senkrecht zu der Strömungsrichtung angeordnet wird eine Ausrichtung der Plasmaelektrode bezeichnet, in der die Strömungsrichtung parallel zu der mindestens einen Durchlassöffnung der Plasmaelektrode liegt.

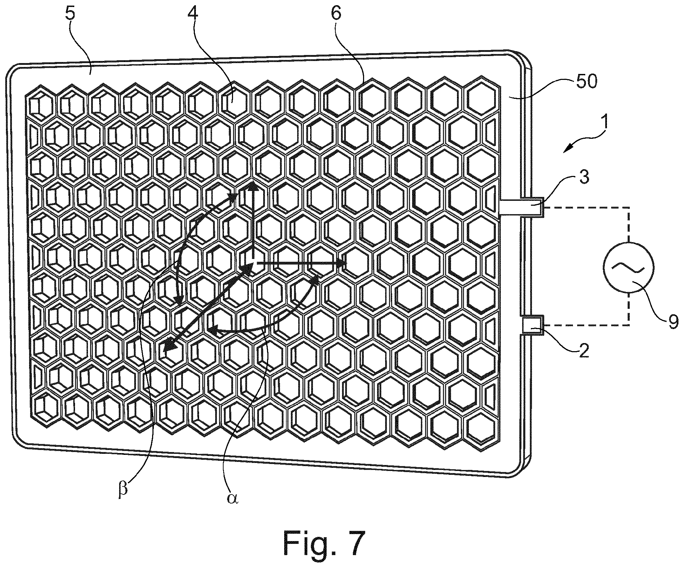

Allerdings kann die Durchströmung der mit VOC's beladenen Luft beziehungsweise Kochwrasen durch die Plasmaelektrode abweichend von der senkrechten Durchströmung auch in anderen Richtungen erfolgen. Insbesondere können die Winkel zwischen der Stirnfläche und der Strömungsrichtung und der Winkel zwischen einer Linie in der Stirnfläche und der Projektion der Strömungsrichtung auf die Stirnfläche im Bereich von 0 < α < 180° und 0 < β <180° liegen (s. Figur 7).

Gemäß einer bevorzugten Ausführungsform stellt die Dunstabzugsvorrichtung eine Dunstabzugshaube dar und die mindestens eine Filtereinheit ist vor dem Gebläse der Dunstabzugsvorrichtung angeordnet.

Bezogen auf die Dunstabzugsvorrichtung ist die erfindungsgemäße Filtereinheit vorzugsweise im Lufteinsaugbereich der Dunstabzugsvorrichtung angeordnet, um die dahinterliegenden Komponenten der Dunstabzugsvorrichtung nicht mit Kochwrasen/Aerosolen/Schmutz zu kontaminieren. Jedoch kann eine Filtereinheit optional auch im Luftausblasbereich in der Dunstabzugsvorrichtung angeordnet werden oder entlang der Luftströmungsführung zwischen dem Einlass- und Auslassbereich der Dunstabzugsvorrichtung liegen.

Die Erfindung wird im Folgenden erneut unter Bezugnahme auf die beiliegenden Figuren genauer beschrieben. Es zeigen:
Figur 1: eine schematische perspektivische Ansicht einer Ausführungsform der Plasmaelektrode einer erfindungsgemäßen Filtereinheit;
Figur 2: eine schematische perspektivische Ansicht der Ausführungsform der Plasmaelektrode nach Figur 1 im angeschalteten Zustand;
Figur 3: eine schematische perspektivische Ansicht einer weiteren Ausführungsform einer Plasmaelektrode einer erfindungsgemäßen Filtereinheit;
Figur 4: eine schematische Detailansicht der Ausführungsform der Plasmaelektrode nach Figur 3;
Figur 5a: eine schematische Schnittansicht einer Ausführungsform der Plasmaelektrode nach Figur 3;
Figur 5b: eine schematische Schnittansicht einer weiteren Ausführungsform der Plasmaelektrode einer erfindungsgemäßen Filtereinheit;
Figur 6a: eine schematische Schnittansicht einer weiteren Ausführungsform der Plasmaelektrode einer erfindungsgemäßen Filtereinheit;
Figur 6b: eine schematische Schnittansicht einer weiteren Ausführungsform der Plasmaelektrode einer erfindungsgemäßen Filtereinheit;
Figur 7: eine schematische Perspektivansicht einer weiteren Ausführungsform der Plasmaelektrode einer erfindungsgemäßen Filtereinheit;
Figur 8: eine schematische Darstellung eines Spannungsverlaufs der Spannung für die Plasmaelektrode einer erfindungsgemäßen Filtereinheit;
Figur 9: eine schematische Darstellung eines weiteren Spannungsverlaufs der Spannung für die Plasmaelektrode einer erfindungsgemäßen Filtereinheit; und
Figur 10: eine schematische Darstellung eines weiteren Spannungsverlaufs der Spannung für die Plasmaelektrode einer erfindungsgemäßen Filtereinheit.

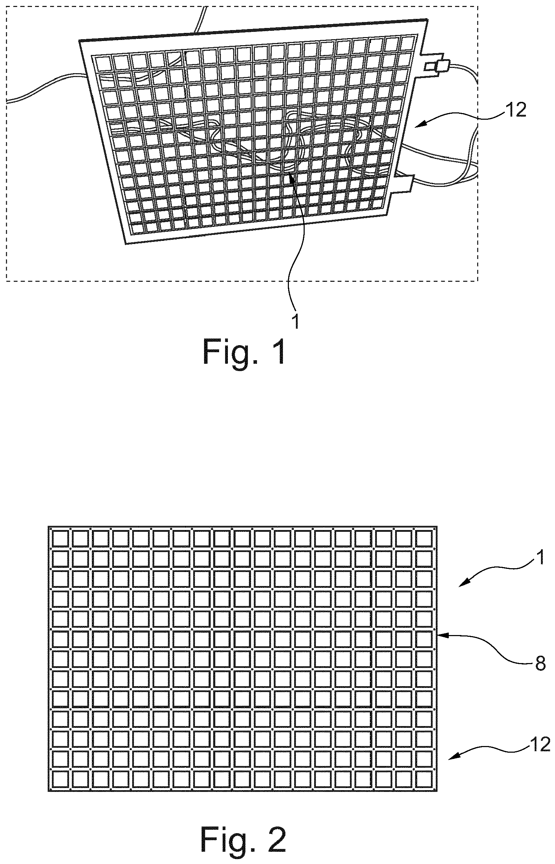

In Figur 1 und Figur 2 ist eine Ausführungsform einer Plasmaelektrode 1 einer erfindungsgemäßen Filtereinheit 12 gezeigt. Die Plasmaelektrode 1 weist in dieser Ausführungsform eine Gitterform auf. In Figur 1 ist die Plasmaelektrode 1 in einem nicht aktivierten Zustand gezeigt. In Figur 2 ist die Plasmaelektrode 1 in dem aktivierten Zustand gezeigt, in dem von der Plasmaelektrode 1 Plasma generiert wird.

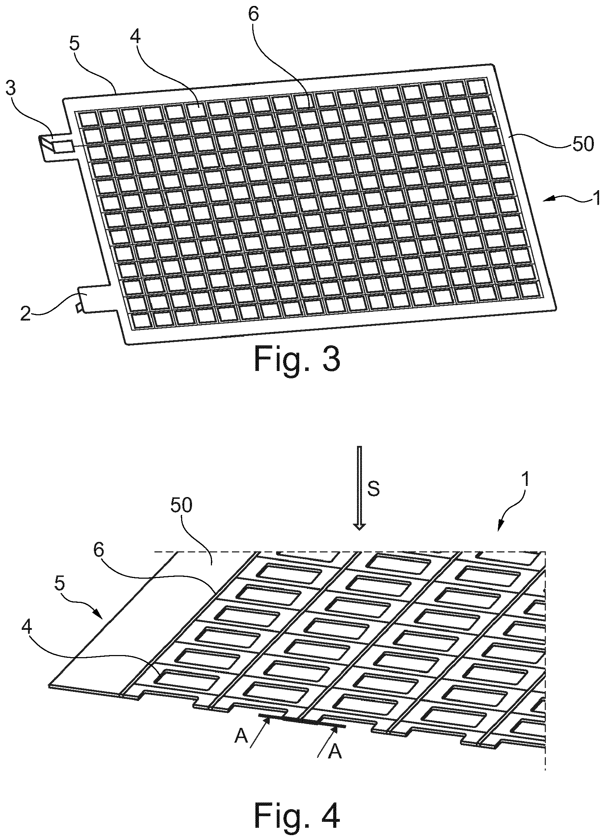

In Figur 3 ist eine Ausführungsform der erfindungsgemäßen Plasmaelektrode 1 in Perspektivansicht gezeigt. Die Plasmaelektrode 1 weist eine Gitterform auf und stellt dadurch eine luftdurchlässige Plasmaelektrode 1 dar. Die Plasmaelektrode 1 wird daher auch als perforierte Plasmaelektrode 1, insbesondere Oberflächenplasma-Elektrode bezeichnet. Die Plasmaelektrode 1 umfasst eine Substrat 5, das als Gitter ausgestaltet ist. In der Struktur des Substrates 5 sind Durchlassöffnungen 4 eingebracht oder ausgebildet. Die Durchlassöffnungen 4 werden auch als Perforation bezeichnet. Auf einer Stirnfläche 50 des Dielektrikums 5 ist eine Gegenelektrode 6 aufgebracht. Die Gegenelektrode 6 weist ebenfalls eine Gitterform auf. Im Inneren des Dielektrikums 5 ist eine Hochspannungselektrode (in Figur 3 nicht sichtbar) angeordnet. Die Hochspannungselektrode weist vorzugsweise ebenfalls eine Gitterform auf. An der Plasmaelektrode 1 sind jeweils mindestens eine Kontaktierungsstelle 2 für die Hochspannungselektrode und mindestens eine Kontaktierungsstelle 3 für die Gegenelektrode 6 vorgesehen. Die Kontaktierungsstellen 2 und 3 können auch als Kontaktstellen bezeichnet werden.

Wie sich aus Figur 4 genauer ergibt, ist die Gegenelektrode 6 so dimensioniert und angeordnet, dass die Durchlässe der Gegenelektrode 6, die durch die Gitterform gebildet werden, mit den Durchlassöffnungen 4 ausgerichtet ist. In der gezeigten Ausführungsform umgibt die Gegenelektrode 6, insbesondere deren jeweils ein Durchlass, jede der Durchlassöffnungen 4. Die Plasmaelektrode 1 wird beim Einsatz in einer Dunstabzugsvorrichtung (nicht gezeigt) von einer Luftströmung S von mit Kochwrasen beladener Luft durchströmt. In der Figur 4 stellt die Stirnfläche 50, auf der die Gegenelektrode 6 angeordnet ist, daher die Anströmseite des Substrates 5 und damit auch der Plasmaelektrode 1 dar.

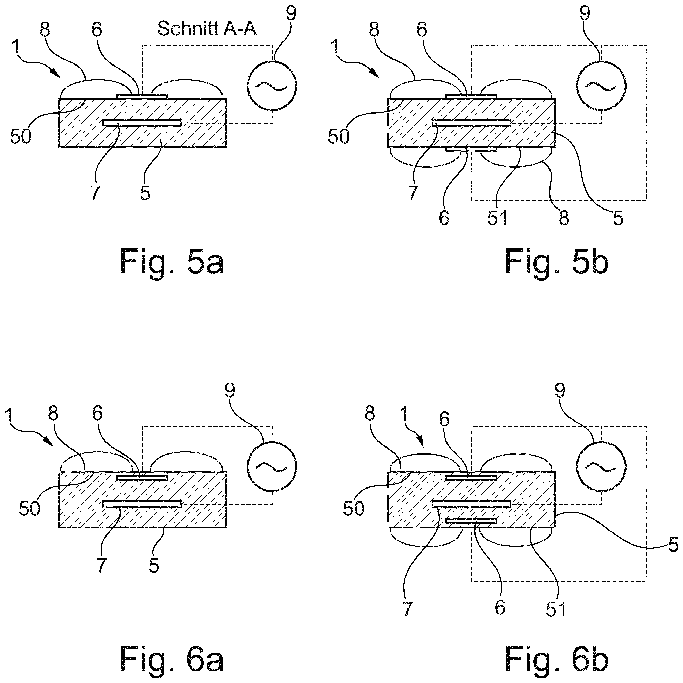

In Figur 5a ist eine Schnittansicht der Ausführungsform nach Figur 4 entlang der Schnittlinie A-A gezeigt. Wie sich aus Figur 5a ergibt, ist in dem Steg der Gitterstruktur des Substrates 5 eine Hochspannungselektrode 7 eingebettet. Die Breite der Hochspannungselektrode 7 im Bereich des Steges des Substrates 5 ist in der gezeigten Ausführungsform breiter als die Breite der Gegenelektrode 6 in dem Bereich des Steges des Substrates 5. Wird eine Spannung, insbesondere eine zeitlich sich ändernde elektrische Spannung angelegt, so bildet sich ein Oberflächenplasma 8 an der Stirnfläche 50 des Substrates 5 und damit der Plasmaelektrode 1 flächig aus. Die Spannung wird über eine Hochspannungsversorgung 9 angelegt. Die Kontaktierung der Hochspannungsversorgung 9 erfolgt über Hochspannungskabel (nicht gezeigt) mit der Plasmaelektrode 1.

Nach Figur 5a ist die mindestens eine Hochspannungselektrode 7 in das Substrat 5 vollständig eingebettet. Die mindestens eine Gegenelektrode 6 hingegen verläuft auf der Stirnfläche 50 des Substrates 5 beziehungsweise ist auf dieser aufgebracht. Die Breite der Gegenelektrode 6 und der Hochspannungselektrode 7 in dem Bereich des Steges des Substrates 5 ist geringer als die Breite des Stegs des Substrates 5, in dem die Hochspannungselektrode 7 eingebettet ist. Die Breite der Gegenelektrode 6 in dem Bereich des Steges des Substrates 5 ist dabei geringer als die Breite der Hochspannungselektrode 7 in dem Steg des Substrates 5.

In Figur 5b ist eine weitere Ausführungsform der Plasmaelektrode 1 in Schnittansicht durch einen Steg einer gitterförmigen Plasmaelektrode 1 gezeigt. Wie sich aus Figur 5b ergibt, unterscheidet sich diese Ausführungsform von der Ausführungsform nach Figur 4 und Figur 5a lediglich dadurch, dass zusätzlich zu der Gegenelektrode 6 an der Stirnfläche 50 auch an der gegenüberliegenden Stirnfläche 51, die auch als Abströmseite bezeichnet werden kann, eine Gegenelektrode 6 angeordnet ist. Somit wird sowohl an der Stirnfläche 50 als auch der Stirnfläche 51 Oberflächenplasma 8 erzeugt.

In Figur 6a ist eine weitere Ausführungsform der Plasmaelektrode 1 in Schnittansicht durch einen Steg einer gitterförmigen Plasmaelektrode 1 gezeigt. Wie sich aus Figur 6a ergibt, unterscheidet sich diese Ausführungsform von der Ausführungsform nach Figur 4 und Figur 5a lediglich dadurch, dass die Gegenelektrode 6 in dem Dielektrikum 5 zu der Stirnfläche 50 benachbart eingebettet ist. Alternativ kann die Gegenelektrode 6 auch statt in dem Dielektrikum 5 eingebettet zu sein auf der Stirnfläche 50 aufgebracht und mit einer Beschichtung abgedeckt sein.

In Figur 6b ist eine weitere Ausführungsform der Plasmaelektrode 1 in Schnittansicht durch einen Steg einer gitterförmigen Plasmaelektrode 1 gezeigt. Wie sich aus Figur 6b ergibt, unterscheidet sich diese Ausführungsform von der Ausführungsform nach Figur 6a lediglich dadurch, dass zusätzlich zu der Gegenelektrode 6 zu der Stirnfläche 50 benachbart auch zu der gegenüberliegenden Stirnfläche 51 benachbart eine Gegenelektrode 6 angeordnet ist. Somit wird sowohl an der Stirnfläche 50 als auch der Stirnfläche 51 Oberflächenplasma 8 erzeugt. Alternativ kann die Gegenelektrode 6 auch statt in dem Substrat 5 eingebettet zu sein auf der Stirnfläche 50 und auf der Stirnfläche 51 jeweils aufgebracht und mit einer Beschichtung abgedeckt sein.

In Figur 7 ist eine weitere Ausführungsform der Plasmaelektrode 1 gezeigt. Diese Ausführungsform unterscheidet sich von der in Figur 3 gezeigten Ausführungsform dadurch, dass bei dieser Ausführungsform die Durchlassöffnungen 4 in der Struktur des Substrates 5 eine hexagonale Form aufweisen. Die Gegenelektrode 6 weist in der gezeigten Ausführungsform ebenfalls eine Gitterform mit hexagonalen Durchlässen auf. Jede der Durchlassöffnungen 4 wird dabei durch einen Teil der Gegenelektrode 6 umgeben, der einen hexagonalen Durchlass der Gegenelektrode 6 bildet. Die Gegenelektrode 6 ist in der gezeigten Ausführungsform auf die Stirnfläche 50 des Substrates 5 aufgebracht. Die Gegenelektrode 6 kann aber auch bei dieser Ausführungsform in das Substrat 5 eingebettet sein oder mit einer Beschichtung überzogen sein. Im Inneren der Struktur des Substrates 5 ist eine Hochspannungselektrode (nicht sichtbar) angeordnet. Die Hochspannungselektrode weist bei der in Figur 7 gezeigten Ausführungsform ebenfalls eine Gitterform mit hexagonalen Durchlässen auf, die mit dem Gitter der Gegenelektrode 6 ausgerichtet ist.

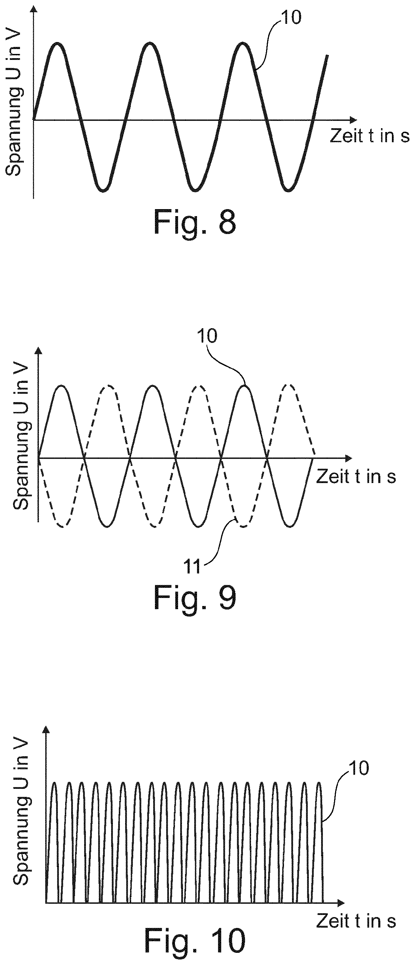

Unter Bezugnahme auf Figuren 8 bis 10 werden mögliche Betriebszustände hinsichtlich der Spannungsversorgung beschrieben.

In der Variante nach Figur 8 liegt an der Hochspannungselektrode eine zeitlich sich ändernde Wechselspannung 10 mit Uₚₑₐₖ > 1 kV an. Hinsichtlich der Spannungsform sind beispielsweise dreieck-, oder rechteckförmigen Spannungsformen möglich, vorzugsweise ist jedoch sinusförmige Wechselspannung nach Figur 8 zu verwenden. Die Gegenelektrode(n) sind in dieser Variante geerdet beziehungsweise mit dem PE-Leiter (protective earth) verbunden. In diesem Fall liegt an der Gegenelektrode(n) keine elektrische Spannung U an.

In der Variante nach Figur 9 liegt sowohl an der Hochspannungselektrode eine elektrische Wechselspannung 10 als auch an der/den Gegenelektrode(n) eine elektrische Wechselspannung 11 mit Uₚₑₐₖ > 1kV an. Die Spannungsform der Hochspannungselektrode als auch der Gegenelektrode sind identisch und unterscheiden sich lediglich in der Phasenverschiebung ϕ zueinander, die zwischen 0 < ϕ < 2π liegt. Vorzugsweise ist eine sinusförmige Wechselspannungsform mit der Phasenverschiebung ϕ = π zu verwenden.

In Figur 10 ist schließlich eine Variante gezeigt, in der eine gepulste Spannungsformen für die Spannungsbeaufschlagung der Hochspannungselektrode schematisch gezeigt ist. Hinsichtlich der Spannungsform, die an der Hochspannungselektrode anliegt, wird beispielsweise eine gepulste Spannung mit einer Periodendauer T <= 1s eingesetzt. Bei der gepulsten Spannung kann es sich um positive oder negative Spannungsart handeln.

Die vorliegende Erfindung weist eine Reihe von Vorteilen auf.

Insbesondere sorgt die erfindungsgemäße, luftdurchlässige Plasmaelektrode, die auch als perforierte Plasmaelektrode bezeichnet werden kann, auf Basis eines Werkstoffverbundes aus keramischem Substrat und metallischen Elektroden (Hochspannungselektrode und Gegenelektrode) für eine homogene Durchmischung der durchströmenden Luft mit Plasma, was wiederum die Filtereffizienz der Filtereinheit steigert. Der Werkstoffverbund kann auch als metallisiertes Keramiksubstrat bezeichnet werden. Im Gegensatz dazu kommt bei parallel angeströmten Plasmaelektroden die Luft nur eingeschränkt mit dem an der Oberfläche gebildeten Plasma in Kontakt, wodurch die Effizienz der bekannten Plasmaelektroden massiv gemindert ist.

Zudem garantieren die eingebetteten Elektroden, zumindest die Hochspannungselektrode, in das Substrat, vorzugsweise in Aluminiumoxid Al₂O₃, einen höchstmöglichen Schutz hinsichtlich elektrischer Isolation und elektrochemischer Korrosion, hervorgerufen durch das Plasma. Dadurch lässt sich die Standzeit der Plasmaelektrode, die auch als Keramikelektrode bezeichnet werden kann, deutlich verlängern.

Das keramische Substrat der erfindungsgemäßen Plasmaelektrode dient als Dielektrikum, ist vorzugsweise temperaturbeständig und chemisch resistent gegen haushaltsübliche Säuren und Laugen. Folglich können solche Plasmaelektroden nach Bedarf in Geschirrspüler gereinigt werden.

### Bezugszeichenliste

- 1: Plasmaelektrode
- 2: Kontaktstelle der Hochspannungselektrode
- 3: Kontaktstelle der Gegenelektrode
- 4: Durchlassöffnung
- 5: Substrat
- 50: Stirnfläche
- 51: Stirnfläche
- 6: Gegenelektrode
- 7: Hochspannungselektrode
- 8: Plasma
- 9: Hochspannungsversorgung
- 10: Spannungsverlauf der Hochspannungselektrode
- 11: Spannungsverlauf der Gegenelektrode
- 12: Filtereinheit

- S: Strömungsrichtung

## Patentansprüche

1. Filtereinheit für eine Dunstabzugsvorrichtung, wobei die Filtereinheit (12) mindestens eine Plasmaelektrode (1) umfassend ein als Dielektrikum wirkendes Substrat (5), eine Hochspannungselektrode (7) und mindestens eine Gegenelektrode (6) umfasst, **dadurch gekennzeichnet, dass** das Substrat (5) aus keramischem Material besteht, dass das Substrat (5) eine luftdurchlässige Struktur mit zumindest einer Durchlassöffnung (4) darstellt und dass zumindest die Hochspannungselektrode (7) in dem Substrat (5) eingebettet ist.

2. Filtereinheit nach Anspruch 1, wobei die luftdurchlässige Struktur des Substrates (5) ein Gitter darstellt.

3. Filtereinheit nach einem der Ansprüche 1 oder 2, wobei die Hochspannungselektrode (7) mindestens einen Durchlass aufweist und ein Durchlass der Hochspannungselektrode (7) zumindest eine Durchlassöffnung (4) der Struktur des Substrates (5) umgibt.

4. Filtereinheit nach einem der Ansprüche 1 bis 3, wobei mindestens eine Gegenelektrode (6) auf einer Stirnfläche (50, 51) des Substrates (5) angeordnet ist.

5. Filtereinheit nach Anspruch 4, wobei mindestens eine Gegenelektrode (6) durch eine Beschichtung abgedeckt ist.

6. Filtereinheit nach Anspruch 5, wobei die Beschichtung eine Glasur darstellt.

7. Filtereinheit nach einem der Ansprüche 5 oder 6, wobei die Beschichtung eine Schichtdicke von maximal 1 mm aufweist.

8. Filtereinheit nach einem der Ansprüche 1 bis 7, wobei mindestens eine Gegenelektrode (6) in dem Substrat (5) benachbart zu einer Stirnfläche (50, 51) des Substrates (5) eingebettet ist.

9. Filtereinheit nach einem der Ansprüche 1 bis 8, wobei die Plasmaelektrode (1) zwei Gegenelektroden (6) aufweist, zwischen denen die Hochspannungselektrode (7) angeordnet ist.

10. Filtereinheit nach einem der Ansprüche 1 bis 9, wobei das Substrat (5) aus Aluminiumoxid besteht.

11. Dunstabzugsvorrichtung **dadurch gekennzeichnet, dass** diese mindestens eine Filtereinheit (12) nach einem der Ansprüche 1 bis 10 aufweist.

12. Dunstabzugsvorrichtung nach Anspruch 11, wobei die mindestens eine Filtereinheit (12) so in der Dunstabzugsvorrichtung angeordnet ist, dass die mindestens eine Plasmaelektrode (1) senkrecht zu der Strömungsrichtung (S) in der Dunstabzugsvorrichtung liegt.
